Europäisches Patentamt

European Patent Office

Office européen des brevets

(19)

(11) EP 0 786 659 A1

## (12) EUROPÄISCHE PATENTANMELDUNG

(43) Veröffentlichungstag:
30.07.1997 Patentblatt 1997/31

(51) Int. Cl.⁶: $G01N\ 21/74$

(21) Anmeldenummer: 96117363.0

(22) Anmeldetag: 29.10.1996

(84) Benannte Vertragsstaaten:
DE FR GB

(30) Priorität: 26.01.1996 DE 19602801

(71) Anmelder: BODENSEEWERK PERKIN-ELMER
GMBH
D-88662 Überlingen (DE)

(72) Erfinder:
• Sperling, Michael, Dr.
78354 Sipplingen (DE)
• Gilmutdinov, Albert, Dr.
88662 Überlingen (DE)

(74) Vertreter: Grünecker, August, Dipl.-Ing.
Patentanwälte
Grünecker, Kinkeldey, Stockmair & Partner
Maximilianstrasse 58
80538 München (DE)

### (54) Verfahren und Vorrichtung zur Atomabsorptionsspektroskopie

(57)    Die Erfindung betrifft ein Verfahren zur Atomabsorptionsspektroskopie eines in einem Absorptionsvolumen eines Atomisators in freie Atome überführten Analyten einer zu analysierenden Probe, umfassend die Schritte (a) orts- und zeitabhängiges Messen der Atomabsorption über den Querschnitt des Absorptionsvolumens und (b) simultanes Bestimmen von Oberflächentemperaturen des Atomisators. Dieses Verfahren zeichnet sich aus durch (c) Rekonstruieren des Temperaturfeldes in dem Absorptionsvolumen aus den bestimmten Oberflächentemperaturen, (d) Bestimmen orts- und zeitabhängiger Teilchenzahlen der absorbierenden Atome des Analyten aus den Messungen der orts- und zeitabhängigen Atomabsorption und dem unter Berücksichtigung von Effekten, die sich auf das Linienprofil des Analyten auswirken, und dem rekonstruierten Temperaturfeld ermittelten Absorptionsprofil, und (e) Bestimmen der zeitabhängigen Gesamtzahl der absorbierenden Atome des Analyten aus den orts- und zeitabhängigen Teilchenzahlen. Außerdem betrifft die Erfindung eine Vorrichtung zur Durchführung dieses Verfahrens.

FIG. 2

**Beschreibung**

Die Erfindung betrifft ein Verfahren zur Atomabsorptionsspektroskopie eines in einem Absorptionsvolumen eines Atomisators in freie Atome überführten Analyten einer zu analysierenden Probe, das die Schritte orts- und zeitabhängiges Messen der Atomabsorption über den Querschnitt des Absorptionsvolumens, und simultanes Bestimmen von Oberflächentemperaturen des Atomisators umfaßt.

Weiterhin betrifft die Erfindung eine Vorrichtung zur Durchführung einer Atomabsorptionsspektroskopie mit einer Strahlungsquelle, einem Atomisator, der ein Absorptionsvolumen einschließt, einem orts- und zeitauflösenden Spektrometer zur Messung des von der Strahlungsquelle ausgesendeten und durch das Absorptionsvolumen hindurchgetretenen Lichts und einer Einrichtung zur Bestimmung der Oberflächentemperatur des Atomisators.

Ein derartiges Verfahren und eine derartige Vorrichtung sind aus der WO 94/23285 bekannt.

Insbesondere wird in diesem bekannten Verfahren zuerst ein Analyt einer zu untersuchenden Probe in dem Absorptionsvolumen eines Graphitofens in die Gasphase in Form von freien Atomen überführt. Von diesen freien Atomen werden von einer Primärlichtquelle ausgesendete charakteristische Wellenlängen absorbiert. Die durch die freien Atome verursachte Extinktion der Primärstrahlungsquelle in diesen Wellenlängen wird dann schließlich in Abhängigkeit von dem Ort in bezug auf den Querschnitt des Ofens zeitaufgelöst, d.h. zu vorbestimmten Zeitpunkten, gemessen.

Nach diesem Verfahren werden zuerst für verschiedene Kalibrationsstandards, deren Konzentrationen bereits bekannt sind, die orts- und zeitabhängigen Extinktionen bestimmt. Demgemäß ergibt sich ein Zusammenhang, d.h. eine Kalibrationsfunktion, zwischen Extinktion und Konzentration des betrachteten Analyten in der Meßprobe.

Zur Bestimmung der Konzentration einer unbekannten Probe wird im folgenden schließlich die orts- und zeitabhängige Extinktion bestimmt und über die Kalibrationsfunktion die der gemessenen Extinktion entsprechende zeitabhängige Konzentration ermittelt.

Hierbei können unspezifische Strahlungsverluste (Untergrundabsorption) können mit in der Atomabsorptionsspektroskopie üblichen Untergrundkorrektorverfahren korrigiert werden, wie z.B. Korrektur mit einem Kontiuumsstrahler, Zeemann-Effekt Untergrundkorrektur oder Korrektur nach dem Smith-Hieftje-Verfahren. Entsprechend den Erfordernissen der benutzen Korrekturtechnik wird die Datenauswertung zeitlich so gesteuert, daß zwischen den betreffenden Signalen (z.B. unspezifische Absorption, totale Absorption, Emission) von dem Atomisator unterschieden werden kann. In jedem Fall aber wird auch die Untergrundabsorption räumlich aufgelöst gemessen, so daß Korrekturfehler durch eine inhomogene Untergrundabsorption deren Verteilung noch dazu von derjenigen der Atomabsorption unterschiedlich sein kann, vermieden werden, welche für die konventionelle nicht räumlich aufgelöste Atomabsorptionsspektroskopie unvermeidlich sind.

Weiterhin kann in diesem Verfahren simultan die Oberflächentemperatur des Atomisators gemessen werden. Dadurch können zusätzlich Erkenntnisse über den Atomisierungsprozeß gewonnen werden.

Durch die Verwendung einer ortsauflösenden Atomabsorptionsspektroskopie werden gemäß der WO 94/23285 räumliche lokale Abweichungen berücksichtigt, die insgesamt zu einer Nichtlinearität der Kalibrationsfunktion führen würden. Demnach müssen in diesem nichtlinearen Bereich viele Kalibrationsmessungen durchgeführt werden, um eine befriedigende, sichere Bestimmung des Zusammenhangs zwischen der gemessenen Extinktion der Atome innerhalb des Absorptionsvolumens und der Konzentration des Analyten in der Meßprobe zu erhalten. Zu solchen räumlich lokalen Abweichungen gehören beispielsweise die inhomogene Verteilung der Atome im Absorptionsvolumen, die inhomogene Verteilung der Strahlungsintensität im Absorptionsvolumen und Temperaturgradienten im Absorptionsvolumen.

Das Verfahren und die Vorrichtung gemäß der WO 94/23285 haben allerdings den Nachteil, daß spektrale Effekte, wie Doppler- und Stoßeffekte, die von der Temperatur abhängen, nicht berücksichtigt werden.

Aufgabe der Erfindung ist es deshalb, das bekannte Verfahren und die bekannte Vorrichtung zu verbessern.

Erfindungsgemäß wird diese Aufgabe durch ein Verfahren der eingangs genannten Art gelöst, das sich auszeichnet durch ein Rekonstruieren des Temperaturfeldes in dem Absorptionsvolumen aus den bestimmten Oberflächentemperaturen, ein Bestimmen orts- und zeitabhängiger Teilchenzahlen der absorbierenden Atome des Analyten aus Messungen der orts- und zeitabhängigen Atomabsorption und dem unter Berücksichtigung von Effekten, die sich auf das Linienprofil des Analyten auswirken, und dem rekonstruierten Temperaturfeld ermittelten Absorptionsprofil, und ein Bestimmen der zeitabhängigen Gesamtzahl der absorbierenden Atome des Analyten aus den orts- und zeitabhängigen Teilchenzahlen.

In dem erfindungsgemäßen Verfahren wird demnach für jeden vorbestimmten Zeitschritt zuerst das Temperaturfeld über den Querschnitt des Absorptionsvolumens aus den an Stützstellen ermittelten Oberflächentemperaturen des Atomisators rekonstruiert. Demgemäß ist die Temperatur in jedem Punkt über den Querschnitt des Absorptionsvolumens bekannt. Mit Hilfe dieser ortsabhängigen Temperatur werden ortsabhängige Absorptionsprofile, in denen spektrale Effekte, wie beispielsweise Doppler- und Druckeffekte bereits berücksichtigt sind, ermittelt. Aus diesen ortsabhängigen Absorptionsprofilen können dann mit Hilfe der Absorptionsmessungen ortsabhängige Teilchenzahlen bestimmt werden, aus denen sich die Gesamtzahl der absorbierenden Atome des Analyten für jeden vorbestimmten Zeitschritt ermitteln läßt.

Dadurch, daß spektrale Effekte, wie Doppler- und Stoßeffekte bei der Ermittlung der ortsabhängigen Teilchenzahlen unmittelbar berücksichtigt werden, können die ortsabhängigen Teilchenzahlen und demnach auch die Gesamtzahl der absorbierenden Atome wesentlich genauer als mit dem Verfahren gemäß dem Stand der Technik bestimmt werden. Insbesondere werden durch diese unmittelbare Berücksichtigung systematische Abweichungen, die durch die genannten Effekte hervorgerufen werden, signifikant reduziert.

Ein weiterer Vorteil des erfindungsgemäßen Verfahrens ergibt sich aus der Tatsache, daß der zur Messung verwendete Versuchsaufbau nur noch bei der Rekonstruktion des Temperaturfeldes in dem Absorptionsvolumen aus den bestimmten Oberflächentemperaturen berücksichtigt werden muß. Hat man beispielsweise für einen bestimmten Versuchsaufbau ermittelt, in welcher Weise das Temperaturfeld aus den Oberflächentemperaturen zu rekonstruieren ist, können mit diesem Aufbau beliebige Analyten untersucht werden, ohne daß Kalibrationsstandards vermessen werden müssen. Dadurch ergibt sich eine gewisse Unabhängigkeit der Messungen von dem verwendeten Aufbau der Vorrichtung.

Neben einer Verbesserung der Meßgenauigkeit ergibt sich demnach bei dem erfindungsgemäßen Verfahren auch eine wesentliche Vereinfachung bei der Durchführung dieser Messungen.

Vorteilhafterweise werden Messungen der orts- und zeitabhängigen Absorption in bezug auf die obengenannte Untergrundabsorption korrigiert.

Gemäß einer besonderen Ausführungsform des Verfahrens kann die orts- und zeitabhängige Teilchenzahl N(X,t) aus

$$\int_{\Delta\lambda} d\lambda J(\lambda,X) e^{-k(\lambda,T)fN(X,t)} = 10^{-A(X,t)} \int_{\Delta\lambda} d\lambda J(\lambda,X) = \Phi(X,t)$$

bestimmt werden; hierbei sind $\lambda$ die Wellenlänge (Integrationsvariable), $\Delta\lambda$ der spektrale Bandpaß des zur Messung der Atomabsorption verwendeten Spektrometers, $J(\lambda,X)$ ein a priori bekanntes Emissionsprofil der zur Messung der Atomabsorption verwendeten Primärstrahlungsquelle, $k(\lambda,T)$ ein a priori bekanntes temperaturabhängiges Absorptionsprofil, f die Oszillatorenstärke des betrachteten Übergangs, $A(X,t)$ die orts- und zeitabhängige Extinktion und $\Phi(X,t)$ die durch Messung bestimmte orts- und zeitabhängige Intensität der durch das Absortionsvolumen hindurchgelaufenen (also des im Absortionsvolumen nichtabsorbierten) Strahlung der Primärstrahlunsquelle.

Durch diese geschlossene Darstellung des Absorptionsprofils ist es möglich, verschiedene physikalische Modelle für das Absorptionsprofil $k(\lambda,T)$ zu verwenden. Hierbei lassen sich zum einen empirisch bestimmte Modelle, d.h. im wesentlichen aus Messungen bestimmte Modelle, und zum anderen aus der Theorie bekannte Modelle anwenden. Die theoretisch bekannten Modelle lassen sich gegebenenfalls auch in bezug auf die vorliegenden Versuchsbedingungen optimieren. Insbesondere können in dieser geschlossenen Darstellung auch Abhängigkeiten von weiteren physikalischen Parametern, die sich auf die Absorption auswirken, relativ einfach berücksichtigt werden.

Weiterhin berücksichtigt dieses Verfahren auch räumlich inhomogene Intensitätsverteilungen der jeweils verwendeten Primärstrahlungsquelle. Demnach entfällt das in der Atomabsorptionsspektroskopie bisher nötige Erfordernis, über den Querschnitt des Absporptionsvolumens eine homogene Strahlungsintensität zur Verfügung stellen zu müssen. Somit ist es zum einen nicht mehr nötig, dieser Forderung durch einen entsprechenden Versuchsaufbau Genüge zu leisten. Zum anderen erhöht sich erfindungsgemäß selbstverständlich die Genauigkeit der Messungen, da Fehler, die gemäß dem Stand der Technik durch Abweichungen von obiger Forderung in die Messung eingeführt werden, entfallen.

Vorteilhafterweise können das Emissionsprofil $J(\lambda,X)$ und das temperaturabhängige Absorptionsprofil $k(\lambda,T)$ a priori aus folgenden Formeln bestimmt werden:

$$J(\lambda,X) = \sum_{k=1}^{n} b_k H_k\left(\frac{\lambda-\Delta\lambda_k}{\alpha}; a_e\right) + J_s(\lambda,X)$$

$$k(\lambda,T) = \sum_{k=1}^{n} b_k H_k(\lambda-\Delta\lambda_k+\Delta\lambda_s; a).$$

Hierin bezeichnen k die k-te Hyperfeinstrukturkomponente des betrachteten Übergangs, $\Delta\lambda_k$ die Position der k-ten Hyperfeinstrukturkomponente, $J_s(\lambda,X)$ das Profil des spektralen Streulichtanteils der Primärstrahlungsquelle, $\Delta\lambda_s$ die Stoßverschiebung des Absorptionsprofils gegenüber dem Emissionsprofil, $H_k(\lambda;...)$ das Voigt-Profil der k-ten Hyperfeinstrukturkomponente, in dem Doppler- und Stoßverbreiterung berücksichtigt sind, a und $a_e$ die Verhältnisse des

Doppler- und des Stoßverbreiterungsanteils für das Absorptionsprofil und das Emissionsprofil, $\alpha$ den Faktor, um den das Emissionsprofil schmaler als das Absorptionsprofil ist, und $b_k$ die relativen, normierten Intensitäten der einzelnen Hyperfeinübergänge.

In dieser vorteilhaften Ausführungsform werden für das Absorptionsprofil und das Emissionsprofil ein quasi klassisches Modell angenommen, in dem die in einem Atom stattfindenden Übergänge, einschließlich der Hyperfeinstrukturübergänge, einzeln berücksichtigt werden können. Dieses Modell wird durch eine Summe der in Spektroskopie allgemein bekannten Voigt-Profile, die einen Gauß-förmigen Doppler- und einen Lorentz-förmigen Stoßverbreiterungsanteil umfassen, berücksichtigt. Demnach ist es insbesondere auch möglich, den Einfluß eines jeden einzelnen Hyperfeinstrukturübergangs auf die Meßergebnisse zu berücksichtigen.

Die obengewählte Darstellung des Emissionsprofils der Primärstrahlungsquelle hat den Vorteil, daß die Einwirkung von Streulicht der Primärstrahlungsquelle auf das Meßergebnis unmittelbar berücksichtigt werden kann. Gegenüber dem bekannten Verfahren führt dies ebenfalls zu einer Verbesserung der Meßergebnisse.

Das erfindungsgemäße Verfahren kann bei verschiedensten auf dem Gebiet der Atomabsortion bekannten Atomisatorformen eingesetzt werden.

Beispielsweise kann ein bekannter Graphitofen mit oder ohne Plattformeinbau verwendet werden. In diesem Fall lassen sich die Temperaturmessungen der Atomisatoroberfläche an Stützstellen, die im Bereich der Atomisatorwand und ggf. im Bereich des Plattformeinbaus definiert werden, durch pyrometrische Messungen bestimmen. Hierbei wird die Strahlungsintensität der von den betreffenden Komponenten ausgesendeten Temperaturstrahlung gemessen und schließlich in eine Temperatur konvertiert. Details, wie eine derartige Temperaturmessung durchgeführt werden kann, sind beispielsweise in der WO 94/23285 offenbart.

Außerdem kann für bestimmte nachzuweisende Analyten, beispielsweise Quecksilber, das Verfahren auch bei einem Versuchsaufbau mit einer Quarzküvette, die sowohl beheizt (z.B. für die Hydridtechnik) als auch unbeheizt (z.B. für die Kaltdampftechnik) betrieben werden kann, eingesetzt werden. In dem letztem Fall reduzieren sich die Temperaturmessungen auf eine Messung der Raumtemperatur.

Weitere vorteilhafte Ausführungsformen des erfindungsgemäßen Verfahrens ergeben sich aus der nachfolgenden Beschreibung der bevorzugten Ausführungsformen sowie aus den abhängigen Verfahrensansprüchen.

Das erfindungsgemäße Verfahren läßt sich mit einer Vorrichtung der eingangs genannten Art durchführen, die sich auszeichnet durch eine Einrichtung zur Rekonstruktion des Temperaturfeldes in dem Absorptionsvolumen aus den bestimmten Oberflächentemperaturen, eine Einrichtung zur Ermittlung von Absorptionsprofilen unter Berücksichtigung von Effekten, die sich auf das Linienprofil des Analyten auswirken, und dem rekonstruierten Temperaturfeld, eine Einrichtung zur Bestimmung orts- und zeitabhängiger Teilchenzahlen der absorbierenden Atome des Analyten aus den orts- und zeitabhängigen Messungen des Spektrometers und den ermittelten Absorptionsprofilen, und eine Einrichtung zur Ermittlung der zeitabhängigen Gesamtteilchenzahl der absorbierenden Atome des Analyten aus den orts- und zeitabhängigen Teilchenzahlen.

Diese erfindungsgemäße Vorrichtung kann vorteilhafterweise entsprechend der spezifischen Ausführungsformen der verwendeten Verfahren weitergebildet werden. Diese vorteilhaften Weiterbildungen ergeben sich ebenfalls aus der Beschreibung der bevorzugten Ausführungsformen, sowie aus den abhängigen Vorrichtungsansprüchen.

Im folgenden wird die Erfindung näher anhand in der Zeichnung dargestellten vorzugsweisen Ausführungsbeispielen erläutert. In der Zeichnung zeigen:

Fig. 1      ein Flußdiagramm zur Erläuterung des Verfahrens gemäß der vorliegenden Erfindung,

Fig. 2      eine Vorrichtung zur Durchführung einer Atomabsorptionsspektroskopie gemäß einer Ausführungsform der vorliegenden Erfindung,

Fig. 3      eine schematische Ansicht einer Abbildung am Ausgangsspalt eines in der Vorrichtung nach Fig. 2 verwendeten Monochromators, die auf das Detektorfeld abgebildet wird, und

Fig. 4      räumlich aufgelöste Strahlungsintensitäten von verschiedenen Quellen, wie beispielsweise der heißen Wand des Atomisators, der heißen Plattform und der Primärstrahlungsquelle.

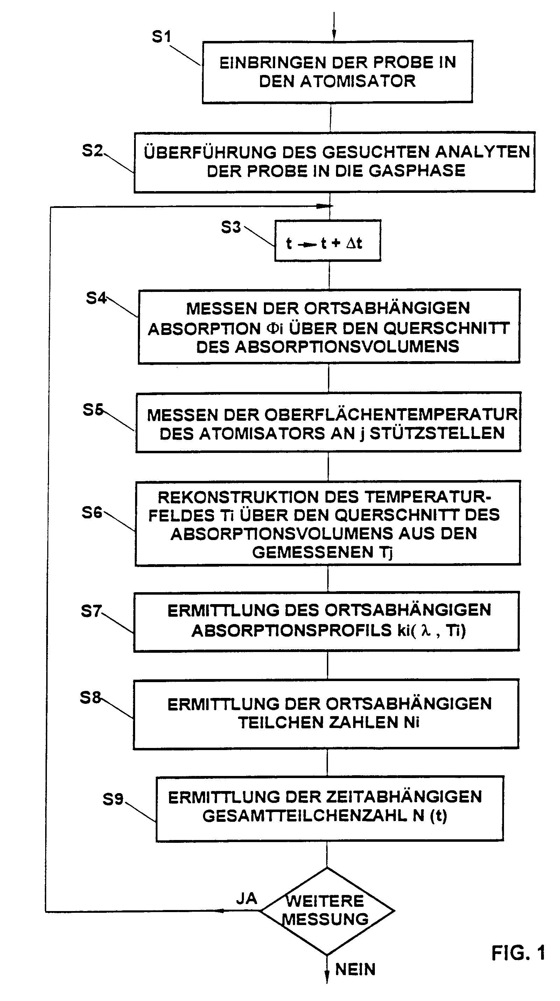

Fig. 1 zeigt ein Flußdiagramm zur Erläuterung des Verfahrens zur Atomabsorptionsspektroskopie gemäß der vorliegenden Erfindung.

In Schritt S1 wird eine zu untersuchende Probe in einen Atomisator eingebracht.

Der gesuchte Analyt in dieser Probe wird in Schritt S2 in die Gasphase überführt. Verwendet man beispielsweise einen Graphitofen, wird diese Überführung durch Erhitzen des Ofens bewirkt.

Neben Graphitöfen können entsprechend den nachzuweisenden Analyten auch andere Atomisatoren verwendet werden. Quarzrohrküvetten erlauben beispielsweise eine kontinuierliche oder intermittierende Einbringung von gasförmig Proben oder Aerosolen mit Hilfe von thermischen, chemischen oder pneumatischen Gas- oder Aerosolgeneratoren.

Für einen vorgegebenen Zeitpunkt, der in Schritt S3 festgelegt wird, wird in Schritt S4 die Messung der ortsabhängigen Atomabsorption durchgeführt. Hierbei wird die Intensität $\Phi(X,t)$ der von der Primärstrahlungsquelle ausgesendeten Strahlung, die durch das Absorptionsvolumen gelaufen ist und demnach nicht von Atomen des Analyten absorbiert wurde, gemessen. Zur Messung der Ortsabhängigkeit wird der Querschnitt des Absorptionsvolumens zweckmäßigerweise in Abhängigkeit von dem verwendeten Detektor diskretisiert. In der bevorzugten Ausführungsform wird dabei die am Ausgangsspalt des Monochromators verfügbare räumliche Information ausgenutzt, indem das Bild am Ausgangsspalt auf ein lineares Photodiodenfeld (PDA) oder ein anderes geeignetes Pixelfeld (CCD-Detektor) abgebildet wird, so daß mit dem i-ten Detektorpixel die Intensität $\Phi_i$ in dem Bereich i des Absorptionsvolumens, der auf das i-te Detektorpixel abgebildet wird, gemessen wird. Entsprechend dem Aufbau des jeweils verwendeten Monochromators kann selbstverständlich auch der gesamte Querschnitt des Absorptionsvolumens auch ein Pixel (CCD-Detektor) abgebildet werden.

Diese orts- und zeitabhängigen Messungen können mit bekannten Untergrundabsorptionsverfahren korrigiert werden.

In Schritt S5 wird die Oberflächentempteratur $T_j$ an j vorbestimmten Stützstellen des Atomisators gemessen. Verwendet man einen Graphitofen mit bzw. ohne Plattformeinbau, werden die Stützstellen an der Rohrwand bzw. an der Rohrwand und dem Plattformeinbau festgelegt. An diesen Stützstellen kann die Oberflächentemperatur durch die von der erhitzten Rohrwand bzw. der erhitzten Rohrwand und dem erhitzten Plattformeinbau ausgesendete Temperaturstrahlung pyrometrisch bestimmt werden. Hierzu lassen sich Standardverfahren verwenden, wie sie beispielsweise in der WO 94/23285 offenbart sind.

Bei pyrometrischer Bestimmung der Oberflächentemperatur der Graphitofenkomponenten können sowohl die Bestimmung der Wärmestrahlungsintensität als auch die Messung der Instensität des von der Primärlichtquelle ausgesendeten und durch das Absorptionsvolumen hindurchgetretenen Lichts mit einem einzigen Detektorfeld durchgeführt werden.

Verwendet man anstelle des Graphitofens eine Quarzzelle, kann die Oberflächentemperatur mittels herkömmlicher Temperaturmeßeinrichtungen, beispielsweise durch Kontaktmessungen mit einem Thermoelement oder dergleichen, bestimmt werden.

In Schritt S6 wird aus den j bestimmten Oberflächentemperaturen oder Stützdaten $T_j$ das Temperaturfeld $T(X,t)$ über den Querschnitt des Absorptionsvolumens rekonstruiert. Da, wie im folgenden noch ausgeführt wird, aus dem rekonstruierten Temperaturfeld $T(X,t)$ und den gemessenen Intensitäten $\Phi_i$ eine orts- und zeitabhängige Teilchenzahl $N(X,t)$ bestimmt werden soll, ist es zweckmäßig, das Temperaturfeld ebenfalls analog zu den gemessenen Intensitäten $\Phi_i$ zu diskretisieren. Demgemäß erhält man der Anzahl i der Detektorpixel entsprechend i Werte des Temperaturfeldes $T_i$.

Zur Rekonstruktion des Temperaturfeldes $T_i$ aus den ermittelten Stützdaten können ofenspezifische theoretische Modelle, in welche die Konstruktionsparameter des jeweils verwendeten Ofens eingehen, verwendet werden.

Alternativ kann das Temperaturfeld $T_i$ auch durch Vergleich der ermittelten Stützdaten mit a priori bekannten, also beispielsweise vorher durch eine Messung ermittelten, Temperaturfeldern an den Stellen, die den j Stützstellen entsprechen, also an den Stellen $T_{i=j}$ ermittelt werden. Die verschiedenen, hierzu erforderlichen, ebenfalls ofenspezifischen Temperaturfelder zu den verschiedenen Zeitschritten können in einer Datenbank zur Verfügung gestellt werden.

Die Messung von Temperaturfeldern verschiedener Öfen kann hierbei durch bekannte Verfahren ausgeführt werden. So ist beispielsweise in dem Artikel "Spatially and temporally resolved gas phase temerature measurements in a Massmann-type graphite tube furnace using coherent anti-Stokes Raman Scattering" von Welz et al. in Spectrochimica Acta, Vol.43 B, Nr. 9-11, Seiten 1187-1207, 1988, offenbart, wie sowohl Längsals auch Querfeld eines längsbeheizten Graphitofens durch kohärente Anti-Stokes Raman-Streuung bestimmt werden können. Die Temperaturmessung in einem transversal beheizten Graphitrohr ist in "Das Aufheizverhalten von längs- und quergeheizten Graphitrohröfen und die daraus resultierenden analytischen Eigenschaften für die Atomabsorptionsspektrometrie" von Sperling et al. in B. Welz, CANAS'95, Colloquium Analytische Atomspektroskopie, Überlingen, 1996 veröffentlicht.

In Schritt S7 werden für das rekonstruierte Temperaturfeld $T_i$ ortsabhängige Absorptionsprofile $k_i$ ermittelt.

Hierbei kann $k_i(\lambda,T)$ durch ein theoretisches Modell der folgenden Form vorgegeben werden:

$$k(\lambda,T)=\sum_{k=1}^{n} b_k H_k(\lambda-\Delta\lambda_k+\Delta\lambda_s;a)$$

In diesem Modell bezeichnen k die k-te Hyperfeinstrukturkomponente des betrachteten Übergangs, $\Delta\lambda_k$ die Position der k-ten Hyperfeinstrukturkomponente, $\Delta\lambda_s$ die Stoßverschiebung des Absorptionsprofils gegenüber dem Emissionsprofil, $H_k(\lambda;a)$ das Voigt-Profil, in dem Doppler- und Stoßverbreiterung berücksichtigt sind, a das Verhältnis des Doppler- und des Stoßverbreiterungsanteils für das Absorptionsprofil und $b_k$ die relativen, normierten Intensitäten der einzelnen Hyperfeinstrukturübergänge.

In dieser Formel werden Doppler- und Stoßeffekte durch das Voigt-Profil $H_k(\lambda - \Delta\lambda_k + \Delta\lambda_s; a)$ automatisch berücksichtigt.

Neben einem theoretischen Modell läßt sich das Absorptionsprofil $k(\lambda, T)$ auch experimentell bestimmen. In bezug auf das Verfahren sind in diesem Fall die experimentell bestimmten Absorptionsprofile für einen hinreichend großen Temperaturbereich zur Verfügung zu stellen. Aus diesen Messungen können dann für gegebene Temperaturen $T_i$ die Absorptionsprofile $k_i$ bestimmt werden.

In Schritt S8 werden die ortsabhängigen Teilchenzahlen $N_i$ der absorbierenden Atome in dem Bereich des Absorptionsvolumens, der auf das i-te Detektorpixel abgebildet wird, ermittelt. Diese Teilchenzahlen $N_i$ ergeben sich aus:

$$\int_{\Delta\lambda} d\lambda J(\lambda, X) e^{-k_i(\lambda)fN_i(t)} = 10^{-A_i(t)} \int_{\Delta\lambda} d\lambda J(\lambda, X) = \Phi_i(t)$$

Hierbei sind $\lambda$ die Wellenlänge (Integrationsvariable), $\Delta\lambda$ der spektrale Bandpaß des zur Messung der Atomabsorption verwendeten Spektrometers, $J(\lambda, X)$ ein a priori bekanntes Emissionsprofil der zur Messung der Atomabsorption verwendeten Primärstrahlungsquelle, $k_i(\lambda)$ das dem i-ten Detektorpixel entsprechende, nach den obigen Ausführungen ermittelte Absorptionsprofil, f die Oszillatorenstärke des betrachteten Übergangs, $A_i(t)$ die orts- und zeitabhängige Extinktion und $\Phi_i(t)$ die durch Messung bestimmte orts- und zeitabhängige Intensität der durch das Absorptionsvolumen hindurchgelaufenen (also des im Absorptionsvolumen nichtabsorbierten) Strahlung der Primärstrahlunsquelle.

Das Emissionsprofil der Primästrahlunsquelle kann hierbei 19durch folgende Formel ausgedrückt werden:

$$J(\lambda, X) = \sum_{k=1}^{n} b_k H_k \left( \frac{\lambda - \Delta\lambda_k}{\alpha}; a_e \right) + J_s(\lambda, X)$$

Hierin bezeichnen k die k-te Hyperfeinstrukturkomponente des betrachteten Übergangs, $\Delta\lambda_k$ die Position der k-ten Hyperfeinstrukturkomponente, $J_s(\lambda, X)$ das Profil des spektralen Streulichtanteils, $H_k(\lambda; a_e)$ das Voigt-Profil, $a_e$ das Verhältnis des Doppler- und des Stoßverbreiterungsanteils für das Emissionsprofil, $\alpha$ den Faktor, um den das Emissionsprofil schmaler als das Absorptionsprofil ist, und $b_v$ die relativen, normierten Intensitäten der einzelnen Hyperfeinübergänge. Diese Darstellung berücksichtigt insbesondere auch den Einfluß des Streulichtanteils der Primärstrahlungsquelle auf die Messung.

Insbesondere in dem Fall, in dem experimentell bestimmte Absorptionsprofile zur Verfügung gestellt werden, muß die Ermittlung aller i Absorptionsprofile gemäß Schritt S7 nicht explizit durchgeführt werden. Vielmehr kann dann bei der Berechnung der i-ten Teilchenzahl das betreffende temperaturabhängige Absorptionsprofil $k(\lambda, T)$ direkt in obige Formel zur Berechnung $N_i$ eingesetzt werden.

Im letzten Schritt S9, der für einen gegebenen Zeitpunkt durchgeführt wird, bestimmt man schließlich aus den orts- und zeitabhängigen Teilchenzahlen $N_i$ die zeitabhängige Gesamtteilchenzahl N(t) der in dem Absorptionsvolumen absorbierenden Atome des untersuchten Analyten der Probe.

Diese Gesamtteilchenzahl N(t) kann beispielsweise durch Integration gemäß der Formel

$$N(t) = \sum_i N_i$$

bestimmt werden.

Nach Durchführung des Schritts S9 kann die Messung entweder beendet werden oder die Schritte S4 bis S9 können für einen weiteren Zeitpunkt $t + \Delta t$ wiederholt werden.

Aus der zeitabhängigen Gesamtzeichenzahl N(t) kann schließlich die Konzentration des betrachteten Analyten in der zu untersuchenden Probe bestimmt werden. Hierzu können bekannte Verfahren, wie beispielsweise die Bestimmung des Maximums von N(t) oder die Integration der gesamten Funktion N(t) verwendet werden.

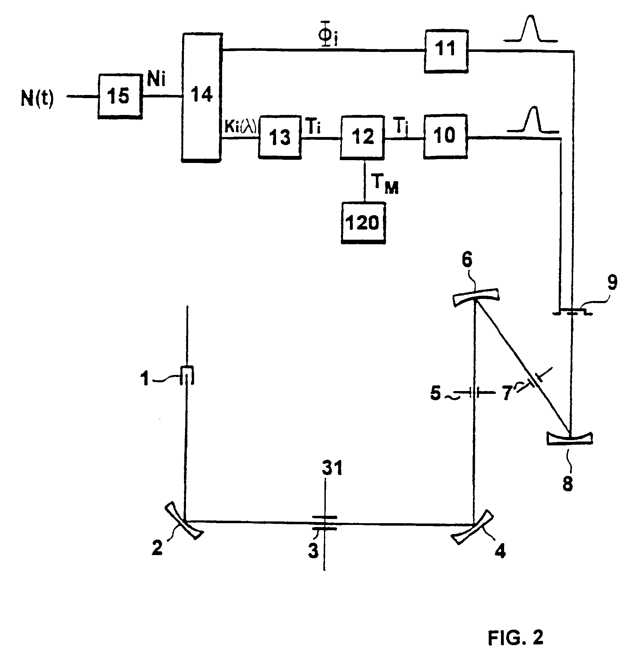

In Fig. 2 ist eine Vorrichtung zur Durchführung einer Atomabsorptionsspektroskopie nach dem oben beschriebenen Verfahren dargestellt.

Mit dem Bezugszeichen 1 ist eine Primärstrahlungsquelle bezeichnet. Als Primärstrahlungsquelle lassen sich die aus der Atomabsorptionsspektroskopie bekannten Strahlungsquellen, wie beispielsweise eine Hohlkathodenlampe, eine elektrodenlose Entladungslampe etc., einsetzen.

Die Bezugszeichen 2 und 4 stellen optische Elemente dar, um die von der Primärstrahlungsquelle ausgesandte Strahlung umzulenken.

Weiterhin ist in der gezeigten Vorrichtung ein rohrförmiger Atomisator 3 vorgesehen. Als Atomisator lassen sich bekannte Graphitrohröfen mit oder ohne Plattformeinbau, beheizte oder unbeheizte Quarzrohrzellen etc., verwenden.

Außerdem weist die Vorrichtung gemäß Fig. 2 einen Monochromator auf, der aus einem Eintrittsspalt 5, einem Gitter 6 und einem Austrittsspalt 7 besteht. Durch diesen Monochromator wird ein spektraler Bandpaß $\Delta\lambda$ realisiert.

An den Monochromator schließt sich ein Projektionsobjektiv 8 an, das den zentralen radialen Querschnitt 31 des Ofens auf einen Halbleiterdetektor 9 zur Auswertung der verfügbaren räumlichen Information abbildet.

Als Halbleiterdetektor 9 wird ein Detektorfeld, beispielsweise ein Linearfeld oder ein Matrixfeld, verwendet. Hierzu eignen sich moderne Halbleiterdetektoren, wie beispielsweise eine Photodiodenzeile oder ein CCD-Detektor.

An den Halbleiterdetektor 9 schließt sich eine Auswerteeinheit 11 an, welche die Signale des Halbleiterdetektors 9 verarbeitet.

Die Komponenten 9 und 11 bilden in der Ausführungsform gemäß Fig. 2 ein orts- und zeitauflösendes Spektrometer.

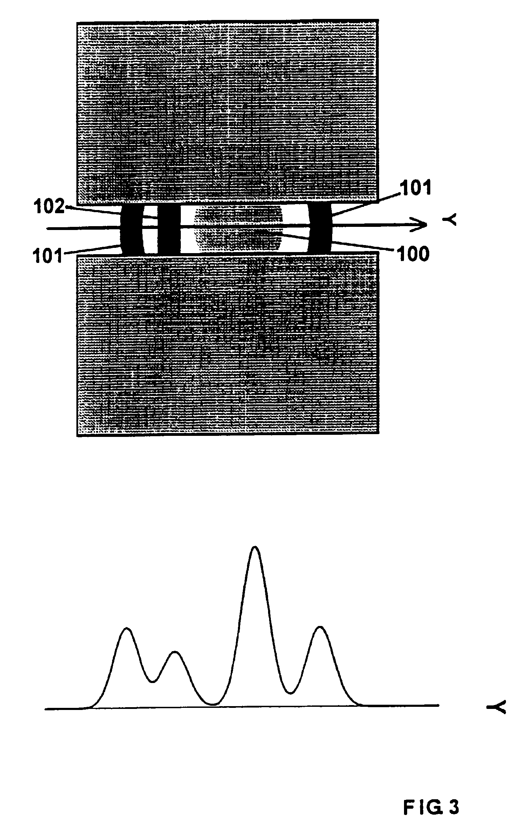

In Fig. 3 ist dargestellt, wie der zentrale radiale Querschnitt 31 eines Graphitofens 3 mit Plattformeinbau durch das optische Element 4, den Monochromator 5, 6 und 7 und das Projektionsobjektiv 8 auf das Detektorfeld 9 abgebildet wird. Darunter ist schematisch dargestellt, welche Intensitäten auf verschiedenen Bereichen des Detektorfeldes gemessen werden.

In dieser schematischen Darstellung resultieren die beiden äußeren Peaks aus der Temperaturstrahlung der Ofenwand. Der kleinere der beiden mittleren Peaks wird durch die Temperaturstrahlung der Plattform, deren Temperatur kleiner als die der Rohrwand ist, verursacht. Der größte Peak in dieser schematischen Darstellung rührt von der Primärstrahlungsquelle her.

Für den dargestellten Fall eines Graphitofens mit Plattformeinbau lassen sich die einzelnen Pixel des Detektors in drei Gruppen einteilen (siehe Fig. 3). Zu der ersten Gruppe zählen die Pixel 100, denen entsprechende Bereiche des Atomisierungsvolumens in den Ofen zugeordnet werden können. Zur zweiten Gruppe zählen die Pixel 101 des Detektorfeldes, auf die mittels des beschriebenen Aufbaus die rohrförmige Ofenwand abgebildet wird. Auf die Gruppe der Pixel 102 wird schließlich analog der Plattformeinbau des Graphitofens 3 abgebildet.

Mit den Pixeln 100, von denen jedes einem bestimmten Bereich in dem Atomisierungsvolumen des Ofens entspricht, wird die Intensität der durch diesen Bereich des Ofens hindurchgelaufenen Strahlung, also der von dem Analyten der Probe nicht absorbierten Strahlung, bestimmt.

Mit den Pixeln 101 der zweiten Gruppe und den Pixeln 102 der dritte Gruppe lassen sich die Intensität der Temperaturstrahlung der erhitzten Ofenwand bzw. der Ofenplattform bestimmen.

Die von den Pixeln 100 des Detektorfeldes ausgegebenen elektrischen Signale werden einer Einrichtung 11 zur Bestimmung der Intensität der von der Strahlungsquelle 1 emittierten und durch das Absorptionsvolumen hindurchgelaufenen Strahlung zugeführt.

Die Signale der Pixel 101 und 102 werden einer Einrichtung 10 zur Bestimmung der Oberflächentemperatur des Atomisators 3 zugeführt. Insbesondere ermittelt die Einrichtung 10 die Oberflächentemperatur $T_j$ an vorbestimmten Stützstellen j im Bereich der Ofenwand bzw. des Plattformeinbaus.

Diese Temperaturen $T_j$ an den vorbestimmten Stützstellen j werden einer Rekonstruktionseinrichtung 12 zugeführt. Diese Rekonstruktionseinrichtung 12 ermittelt aus den Messungen an den Stützstellen das in bezug auf die Längsachse des Ofens radiale nach der oben beschriebenen Prozedur diskretisierte Temperaturfeld $T_i$.

Hierzu können, wie obenstehend bereits erläutert, ofenspezifische theoretische Modelle, in welche die Konstruktionsparameter des jeweils verwendeten Atomisators eingehen, verwendet werden.

Alternativ kann das Temperaturfeld auch durch Vergleich der an den Stützstellen gemessenen Temperaturen mit a priori gemessenen Temperaturfeldern ermittelt werden. Die verschiedenen, hierzu erforderlichen Temperaturfelder $T_M$ zu den verschiedenen Zeitschritten können in einer Datenbank 120 gespeichert werden. Hierdurch ist ein schneller Zugriff der Rekonstruktionseinrichtung 12 auf die verschiedenen Temperaturfelder zur Durchführung des Vergleichs gewährleistet. In dieser Datenbank 120 lassen sich auch einander korrespondierende Temperaturfelder für verschiedene Öfen abspeichern.

Das in der Einrichtung 12 rekonstruierte, ortsabhängige Temperaturfeld $T_i$ wird einer Einrichtung 13 zur Ermittlung der Absorptionsprofile unter Berücksichtigung von Doppler- und Stoßeffekten und dem rekonstruierten Temperaturfeld zugeführt.

Diese Einrichtung 13 kann in Form eines Mikrocomputers vorgesehen werden, in der die orts- und zeitabhängigen Temperaturprofile für bestimmte Temperaturen T nach der oben diskutierten Formel

$$k(\lambda,T)=\sum_{k=1}^{n} b_k H_k(\lambda-\Delta\lambda_k+\Delta\lambda_s;a)$$

ermittelt werden.

Diese orts- und zeitabhängigen Temperaturprofile $k_i(\lambda,T)$ werden von der Einrichtung 13 an eine Einrichtung 14 zur Bestimmung von orts- und zeitabhängigen Teilchenzahlen der absorbierenden Atome des Analyten gegeben. Zusammen mit den gemessenen diskretisierten, also den i Detektorpixeln entsprechenden, Intensitäten $\Phi_i$ der durch das Absorptionsvolumen hindurchgelaufenen (und nicht absorbierten) Strahlung der Primärstrahlungsquelle ermittelt die Einrichtung 14 die orts- und zeitabhängigen Teilchenzahlen $N_i$ nach der oben diskutierten Formel

$$\int_{\Delta\lambda} d\lambda\, J(\lambda,X)e^{-k_i(\lambda)fN_i(t)} = 10^{-A_i(t)} \int_{\Delta\lambda} d\lambda\, J(\lambda,X) = \Phi_i(t)$$

Aus diesen ortsabhängigen Teilchenzahlen $N_i$ kann dann durch eine Integrationseinrichtung 14 die zeitabhängige Gesamtteilchenzahl N(t) der absorbierenden Atome des Analyten in dem Absorptionsvolumen bestimmt werden. Für diagnostische Zwecke können auch die lokalen Teilchenzahlen ausgewertet und dargestellt werden.

Alternativ zu dem oben beschriebenen Graphitofen mit Plattformeinbau kann auch ein Graphitofen ohne Plattformeinbau verwendet werden.

In diesem Fall zählen die oben genannten Pixel 102 zur ersten Gruppe und können demnach entsprechenden Bereichen im Atomisierungsvolumen in dem Ofen zugeordnet werden. Außerdem kann in dieser Ausführungsform die Anzahl der Stützwerte, an denen die Oberflächentemperatur mittels Pyrometrie bestimmt wird, wegen der radialen Symmetrie des rohrförmigen Ofens verringert werden.

Bei Verwendung eines Graphitofens ohne Plattformeinbau ist die Rekonstruktionseinrichtung so anzupassen, daß aus den gemessenen Rohrwandtemperaturen das ortsabhängige Temperaturfeld rekonstruiert werden kann. Analog zum Ofen mit Plattformeinbau können hierzu entweder ein theoretisches Modell oder a priori Messungen des Temperaturfeldes des verwendeten Ofens angenommen werden.

Neben Graphitöfen können auch, in Abhängigkeit von den zu untersuchenden Analyten, heizbare Öfen aus Metall, Kieselglasrohratomisatoren verwendet werden, die entweder unbeheizt für die Kaltdampftechnik oder extern durch Flammen oder elektrisch beheizt betrieben werden können.

In diesem Fall ist die Einrichtung 10 zur Bestimmung der Temperatur des Atomisators so ausgebildet, daß sie die Oberflächentemperatur in geeigneter Weise mißt. Demgemäß ist die Einrichtung 10 nicht mehr mit dem Detektorfeld 9, sondern mit einem herkömmlichen Temperatursensor verbunden. Hierbei sind in der Regel nur wenige Messungen erforderlich, um eine hinreichend genaue Bestimmung der Oberflächentemperatur des Atomisators zu erzielen. Weiterhin vereinfacht sich in diesem Fall auch die Rekonstruktionseinrichtung 12, da die radialen Temperaturgradienten über die Querschnittsfläche des Ofens vergleichsweise klein sind.

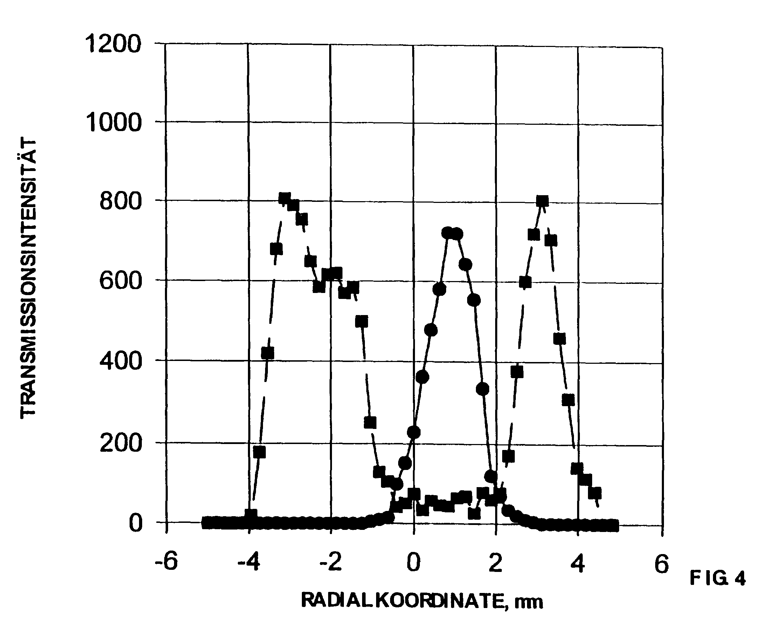

Fig. 4 zeigt eine quantitative Darstellung des in Fig. 3 schematisch angedeuteten Intensitätsprofils auf verschiedenen Bereichen des Detektorfeldes. Die ausgefüllten Quadrate in Fig. 4 bezeichnen die Meßpunkte der Temperaturstrahlungsintensität des Ofens. Durch die ausgefüllten Kreise ist die Strahlungsintensität der Primärstrahlungsquelle, in diesem Fall einer Hohlkathodenlampe, dargestellt. Analog zu Fig. 3 ergeben sich die beiden äußeren Peaks aus der Temperaturstrahlung der Ofenwände. Der kleinere der beiden mittleren Peaks ergibt sich aus der Temperaturstrahlung der Plattform, und der größere der beiden Peaks stellt die Strahlungsinsensität der Hohlkathodenlampe dar.

**Patentansprüche**

1. Verfahren zur Atomabsorptionsspektroskopie eines in einem Absorptionsvolumen eines Atomisators in freie Atome überführten Analyten einer zu analysierenden Probe, umfassend die Schritte:

    (a) orts- und zeitabhängiges Messen der Atomabsorption über den Querschnitt des Absorptionsvolumens,

    (b) simultanes Bestimmen von Oberflächentemperaturen des Atomisators,
    **gekennzeichnet durch**

    (c) Rekonstruieren des Temperaturfeldes in dem Absorptionsvolumen aus den bestimmten Oberflächentemperaturen,

    (d) Bestimmen orts- und zeitabhängiger Teilchenzahlen der absorbierenden Atome des Analyten aus den Messungen der orts- und zeitabhängigen Atomabsorption und dem unter Berücksichtigung von Effekten, die sich auf das Linienprofil des Analyten auswirken, und dem rekonstruierten Temperaturfeld ermittelten Absorptionsprofil, und

(e) Bestimmen der zeitabhängigen Gesamtzahl der absorbierenden Atome des Analyten aus den orts- und zeitabhängigen Teilchenzahlen.

2. Verfahren nach Anspruch 1, wobei die orts- und zeitabhängige Teilchenzahl N(X,t) bestimmt wird aus:

$$\int_{\Delta\lambda} d\lambda J(\lambda,X)e^{-k(\lambda,T)fN(X,t)}=10^{-A(X,t)}\int_{\Delta\lambda} d\lambda J(\lambda,X)=\Phi(X,t)$$

mit:

$\lambda$:     Wellenlänge (Integrationsvariable)

$\Delta\lambda$:     spektraler Bandpaß des zur Messung der Atomabsorption verwendeten Spektrometers

$J(\lambda,X)$:     a priori bekanntes Emissionsprofil der zur Messung der Atomabsorption verwendeten Primärstrahlungsquelle,

$k(\lambda,T)$:     für gemessene Temperatur T a priori bekanntes temperaturabhängiges Absorptionsprofil

$f$:     Oszillatorenstärke für betrachteten Übergang,

$A(X,t)$:     orts- und zeitabhängige Extinktion

$\Phi(X,t)$:     die durch Messung bestimmte orts- und zeitabhängige Intensität der durch das Absortionsvolumen hindurchgelaufenen (also der im Absorptionsvolumen nicht absorbierten) Strahlung der Primärstrahlungsquelle

3. Verfahren nach Anspruch 2, wobei das Emissionsprofil $J(\lambda,X)$ und das temperaturabhängige Absorptionsprofil $k(\lambda,T)$ a priori bestimmt werden aus:

$$J(\lambda,X)=\sum_{k=1}^{n}b_kH_k\left(\frac{\lambda-\Delta\lambda_k}{\alpha};a_e\right)+J_s(\lambda)$$

$$k(\lambda,T)=\sum_{k=1}^{n}b_kH_k(\lambda-\Delta\lambda_k+\Delta\lambda_s;a)$$

mit:

$k$:     k-te Hyperfeinstrukturkomponente

$\Delta\lambda_k$:     Position der $\nu$-ten Hyperfeinstrukturkomponente

$J_s(\lambda,X)$:     Profil des spektralen Streulichtanteils

$\Delta\lambda_s$:     Stoßverschiebung des Absorptionsprofils gegenüber dem Emissionsprofil

$H_k$:     Voigt-Profil, in dem Doppler- und Druckverbreiterung der betreffenden Spektrallinse berücksichtigt sind,

$a, a_e$:     Verhältnis der beiden Verbreiterungsanteile für das Absorptionsprofil und das Emissionsprofil

$\alpha$:     Faktor, um den das Emissionsprofil schmaler als das Absorptionsprofil ist

$b_k$:     relative normierte Intensitäten der Hyperfeinstrukturübergänge

4. Verfahren nach einem der vorangegangenen Ansprüche, wobei das Temperaturfeld aus Oberflächentemperaturen, die an von dem verwendeten Atomisator abhängigen Stützwerten bestimmt werden, und einem von dem Atomisator abhängigen Modell rekonstruiert wird.

5. Verfahren nach Anspruch 4, wobei ein Graphitofen als Atomisator verwendet wird.

6. Verfahren nach Anspruch 5, wobei die Stützwerte im Bereich der Rohrwand vorgesehen werden.

7. Verfahren nach Anspruch 5 oder 6, wobei ein Graphitofen mit Plattformeinbau verwendet wird.

8. Verfahren nach Anspruch 7, wobei zusätzliche Stützwerte im Bereich des Plattformeinbaus vorgesehen werden.

9. Verfahren nach einem der Ansprüche 4-8, wobei die Oberflächentemperaturen an den Stützwerten durch Pyrometrie gemessen werden.

10. Verfahren nach Anspruch 9, wobei die Oberflächentemperaturen an den Stützwerten mit dem zur Messung der Atomabsorption verwendeten Detektor gemessen werden.

11. Verfahren nach Anspruch 4, wobei eine in beheizte oder unbeheizte Quarzküvette als Atomisator verwendet wird.

12. Verfahren nach Anspruch 11, wobei die Oberflächentemperatur des Atomisators durch wenigstens eine oberflächennahe Messung der Temperatur bestimmt wird.

13. Verfahren nach einem der vorangegangenen Ansprüche, wobei die zeitabhängige Gesamtzahl durch Integration der orts- und zeitabhängigen Teilchenzahlen bestimmt wird.

14. Vorrichtung zur Durchführung einer Atomabsorptionspektroskopie mit:

   einer Strahlungsquelle (1),

   einem Atomisator (3), der ein Absorptionsvolumen zur Verfügung stellt,

   einem orts- und zeitauflösenden Spektrometer (9, 11) zur Messung des von der Strahlungsquelle ausgesendeten und durch das Absorptionsvolumen hindurchgetretenen Lichts über den Querschnitt des Absorptionsvolumens,

   einer Einrichtung (9, 10) zur Bestimmung von Oberflächentemperaturen des Atomisators,
   **gekennzeichnet durch**

   eine Einrichtung (12) zur Rekonstruktion des Temperaturfeldes in dem Absorptionsvolumen aus den bestimmten Oberflächentemperaturen,

   eine Einrichtung (13) zur Ermittlung von Absorptionsprofilen unter Berücksichtigung von Effekten, die sich auf das Linienprofil des Analyten auswirken, und dem rekonstruierten Temperaturfeld,

   eine Einrichtung (14) zur Bestimmung orts- und zeitabhängiger Teilchenzahlen der absorbierenden Atome des Analyten aus den orts- und zeitabhängigen Messungen des Spektrometers und den ermittelten Absorptionsprofilen, und

   eine Einrichtung (15) zur Ermittlung der zeitabhängigen Gesamtteilchenzahl der absorbierenden Atome des Analyten aus den orts- und zeitabhängigen Teilchenzahlen.

15. Vorrichtung nach Anspruch 14, in welcher die Einrichtung (14) zur Bestimmung der orts- und zeitabhängigen Teilchenzahlen so angepaßt ist, daß die orts- und zeitabhängigen Teilchenzahlen N(X,t) bestimmt werden aus:

$$\int_{\Delta\lambda} d\lambda J(\lambda,X) e^{-k(\lambda,T)fN(X,t)} = 10^{-A(X,t)} \int_{\Delta\lambda} d\lambda J(\lambda,X) = \Phi(X,t)$$

   mit:

   $\lambda$:            Wellenlänge (Integrationsvariable)
   $\Delta\lambda$:         spektraler Bandpaß des zur Messung der Atomabsorption verwendeten Spektrometers
   $J(\lambda,X)$:     a priori bekanntes Emissionsprofil der zur Messung der Atomabsorption verwendeten Primärstrahlungsquelle,
   $k(\lambda,T)$:     für gemessene Temperatur T a priori bekanntes temperaturabhängiges Absorptionsprofil
   f:            Oszillatorenstärke für betrachteten Übergang,
   $A(X,t)$:      orts- und zeitabhängige Extinktion
   $\Phi(X,t)$:      die durch Messung bestimmte orts- und zeitabhängige Intensität der durch das Absortionsvolumen hindurchgelaufenen (also der im Absorptionsvolumen nicht absorbierten) Strahlung der Primärstrahlungsquelle

16. Vorrichtung nach Anspruch 15, in welcher die Einrichtung zur Ermittlung des Absorptionsprofils so angepaßt ist, daß das orts- und zeitabhängige Absorptionsprofil k($\lambda$,T) bestimmt wird aus:

$$k(\lambda,T)=\sum_{k=1}^{n} b_k H_k(\lambda-\Delta\lambda_k+\Delta\lambda_s;a)$$

und das bekannte Emissionsprofil J($\lambda$,X) beschrieben wird durch

$$J(\lambda,X)=\sum_{k=1}^{n} b_k H_k\left(\frac{\lambda-\Delta\lambda_k}{\alpha};a_e\right)+J_s(\lambda,X)$$

mit:

k:                  k-te Hyperfeinstrukturkomponente
$\Delta\lambda_k$:              Position der $\nu$-ten Hyperfeinstrukturkomponente
$J_s(\lambda,X)$:          Profil des spektralen Streulichtanteils
$\Delta\lambda_s$:              Stoßverschiebung des Absorptionsprofils gegenüber dem Emissionsprofil
$H_k$:                Voigt-Profil, in dem Doppler- und Druckverbreiterung der betreffenden Spektrallinse berücksichtigt sind,
a, $a_e$:              Verhältnis der beiden Verbreiterungsanteile für das Absorptionsprofil und das Emissionsprofil
$\alpha$:                  Faktor, um den das Emissionsprofil schmaler als das Absorptionsprofil ist
$b_k$:                relative normierte Intensitäten der Hyperfeinstrukturübergänge

17. Vorrichtung nach einem der Ansprüche 14-16, in welcher die Einrichtung zur Messung der Oberflächentemperatur des Atomisators (3) so ausgelegt ist, daß die Oberflächentemperatur an von dem verwendeten Atomisator abhängigen Stützwerten bestimmbar ist.

18. Vorrichtung nach Anspruch 17, in welcher der Atomisator (3) ein Ofen aus Graphit oder Metall ist.

19. Vorrichtung nach Anspruch 18, in welcher die Stützwerte zur Bestimmung der Oberflächentemperatur im Bereich der Rohrwand vorgesehen sind.

20. Vorrichtung nach Anspruch 18 oder 19, in welcher der Graphitofen einen Plattformeinbau aufweist.

21. Vorrichtung nach Anspruch 20, in welcher zusätzlich Stützwerte im Bereich des Plattformeinbaus vorgesehen sind.

22. Vorrichtung nach einem der Ansprüche 17-21, in welcher eine Pyrometereinrichtung (10) zur Messung der Oberflächentemperaturen an den Stützwerten vorgesehen ist.

23. Vorrichtung nach Anspruch 22, in welcher die Pyrometrieeinrichtung und die orts- und zeitauflösende Spektrometereinrichtung einen gemeinsamen Detektor (9) aufweisen.

24. Vorrichtung nach Anspruch 22, in welcher der gemeinsame Strahlungsdetektor (9) ein Halbleiterdetektorfeld aufweist.

25. Vorrichtung nach Anspruch 17, in welcher der Atomisator (3) eine beheizte oder unbeheizte Küvette aus Quarz oder keramischen Material ist.

26. Vorrichtung nach Anspruch 25, in welcher die Einrichtung zur Bestimmung der Oberflächentemperatur des Atomisators eine Einrichtung zur Kontaktmessung ist.

27. Vorrichtung nach einem der Ansprüche 14-26, in welcher die Einrichtung (15) zur Bestimmung der Gesamtzahl der absorbierenden Atome des Analyten eine Integrationsvorrichtung zur Integration der orts- und zeitabhängigen Teil-

chenzahlen ist.

S1 — EINBRINGEN DER PROBE IN DEN ATOMISATOR

S2 — ÜBERFÜHRUNG DES GESUCHTEN ANALYTEN DER PROBE IN DIE GASPHASE

S3 — $t \rightarrow t + \Delta t$

S4 — MESSEN DER ORTSABHÄNGIGEN ABSORPTION $\Phi i$ ÜBER DEN QUERSCHNITT DES ABSORPTIONSVOLUMENS

S5 — MESSEN DER OBERFLÄCHENTEMPERATUR DES ATOMISATORS AN j STÜTZSTELLEN

S6 — REKONSTRUKTION DES TEMPERATUR-FELDES $Ti$ ÜBER DEN QUERSCHNITT DES ABSORPTIONSVOLUMENS AUS DEN GEMESSENEN $Tj$

S7 — ERMITTLUNG DES ORTSABHÄNGIGEN ABSORPTIONSPROFILS $ki(\lambda, Ti)$

S8 — ERMITTLUNG DER ORTSABHÄNGIGEN TEILCHEN ZAHLEN $Ni$

S9 — ERMITTLUNG DER ZEITABHÄNGIGEN GESAMTTEILCHENZAHL $N(t)$

JA — WEITERE MESSUNG

NEIN

FIG. 1

13

FIG. 2

FIG. 3

FIG. 4

**Europäisches Patentamt**

# EUROPÄISCHER RECHERCHENBERICHT

Nummer der Anmeldung

EP 96 11 7363

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A,D | WO 94 23285 A (BODENSEEWERK PERKIN-ELMER GMBH) 13.Oktober 1994 <br> * Seite 3, Zeile 14 - Seite 5, Zeile 8; Abbildungen 1,2 * <br> --- | 1,4,9,14 | G01N21/74 |
| A | EP 0 274 134 A (HITACHI LTD) 13.Juli 1988 <br> * Spalte 2, Zeile 1 - Zeile 54 * <br> --- | 1,4,5,14 | |
| A | OPTICS COMMUNICATIONS, <br> Bd. 68, Nr. 1, 1.September 1988, <br> AMSTERDAM, THE NETHERLANDS, <br> Seiten 75-79, XP000197205 <br> WENZEL N. ET AL.: "CARS temperature studies of the gas phase in a Massmann-type graphite tube furnace." <br> * Seite 77, rechte Spalte, Absatz 3; Abbildung 2 * <br> --- | 1 | |
| A | ANALYTICAL CHEMISTRY, <br> Bd. 65, Nr. 6, 15.März 1993, <br> Seiten 716-723, XP000363148 <br> CHAKRABARTI C L ET AL: "DIGITAL IMAGING OF ATOMIZATION PROCESSES IN ELECTROTHERMAL ATOMIZERS FOR ATOMIC ABSORPTION SPECTROMETRY" <br> * Seite 717, rechte Spalte, Zeile 42 - Seite 719, linke Spalte, Zeile 6 * <br> ----- | 14 | **RECHERCHIERTE SACHGEBIETE (Int.Cl.6)** <br><br> G01N |

Der vorliegende Recherchenbericht wurde für alle Patentansprüche erstellt

| Recherchenort | Abschlußdatum der Recherche | Prüfer |
|---|---|---|
| BERLIN | 6.Mai 1997 | Navas Montero, E |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

........................................................................
& : Mitglied der gleichen Patentfamilie, übereinstimmendes Dokument

EPO FORM 1503 03.82 (P04C03)